(19) **Europäisches Patentamt**

**European Patent Office**

**Office européen des brevets**

(11) **EP 1 213 574 B1**

(12) **EUROPEAN PATENT SPECIFICATION**

(45) Date of publication and mention
of the grant of the patent:
**04.10.2006 Bulletin 2006/40**

(51) Int Cl.:
***G01M 11/02*** (2006.01)

(21) Application number: **01126225.0**

(22) Date of filing: **05.11.2001**

(54) **Lens meter with marking means and procedure and device for processing a spectacle lens**

Linsenmessgerät mit Markierungseinrichtung, sowie Verfahren und Vorrichtung zur Bearbeitung von Brillengläsern

Lentillomètre avec moyens de marquage et procédé et dispositif de traitement de verres de lunettes

(84) Designated Contracting States:
**AT BE CH CY DE DK ES FI FR GB GR IE IT LI LU MC NL PT SE TR**

(30) Priority: **11.12.2000 JP 2000376392**

(43) Date of publication of application:
**12.06.2002 Bulletin 2002/24**

(73) Proprietor: **HOYA CORPORATION**
**Shinjuku-ku,**
**Tokyo 161-8525 (JP)**

(72) Inventors:
• **Daimaru, Takashi,**
**c/o Hoya Corporation**
**Tokyo, 161-8525 (JP)**

• **Samukawa, Masahiko,**
**c/o Hoya Corporation**
**Tokyo, 161-8525 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**US-A- 5 247 341      US-A- 5 661 816**

• **PATENT ABSTRACTS OF JAPAN vol. 1999, no. 13, 30 November 1999 (1999-11-30) & JP 11 218468 A (TOPCON CORP), 10 August 1999 (1999-08-10)**
• **PATENT ABSTRACTS OF JAPAN vol. 1997, no. 05, 30 May 1997 (1997-05-30) & JP 09 015097 A (TOPCON CORP), 17 January 1997 (1997-01-17)**

EP 1 213 574 B1

**Description**

Field of the Invention

The present invention relates to a method for processing a spectacle lens comprising a step of measuring a lens which comprises deriving optical information including a position of an optical reference point using a lens meter for measuring optical properties, including a prism value, of a spectacle lens and a step of processing which comprises using the optical information derived in the step of measuring a lens as a portion of data for processing, and to a lens meter therefor.

Related Prior Art

A spectacle glass is prepared by processing an uncut spectacle lens (in general, a so-called round lens having a circular shape) into a shape fitting the shape of a spectacle frame and fitting the cut lens into the spectacle frame. The uncut round lens is prepared and supplied by a lens manufacturer based on the data of the prescription on the eye of the person who is to wear the spectacle glass (the dioptric power, the cylindrical dioptric power, the distance between the right and left eyes and the like other data), the data on the shape of the spectacle frame selected by the person who is to wear the spectacle glass and the layout information.

Measurements of the round lens supplied from the lens manufacturer are conducted by the manufacturer using a lens meter. The position of the optical center and the cylinder axis are obtained and marks showing the position and the angle are placed on the lens. The marks are used as marks showing the position and the angle of attachment of a lens holder which is attached to the uncut lens before the processing as a jig used as the axis of rotation of the lens in the processing of the lens.

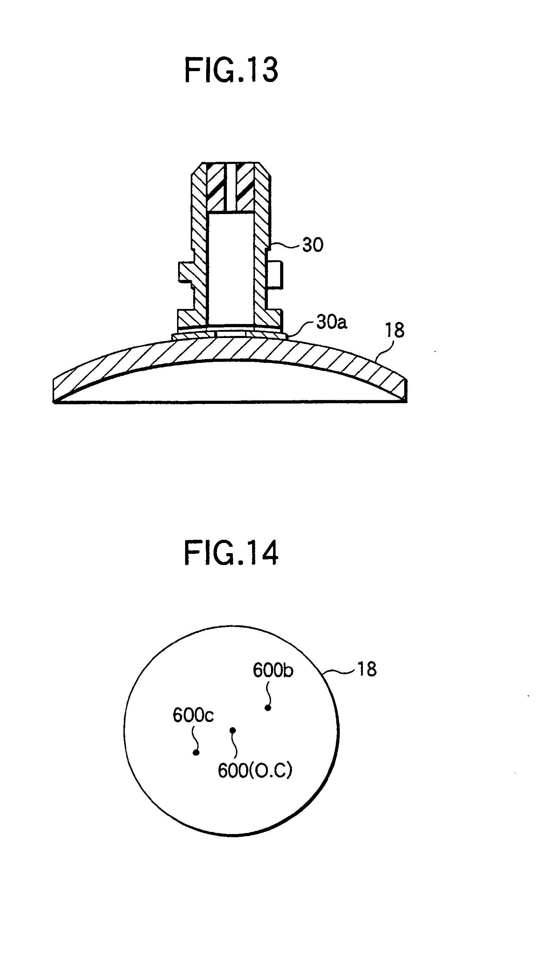

In accordance with the conventional method for obtaining the position of the optical center of an uncut lens, an optical property such as the prism value is measured using a lens meter at a position estimated to be close to the optical center. The measurement is repeated at different estimated positions until the position where the obtained value becomes zero is found out and the found position is decided as the position of the optical center (for example, the specifications of Japanese Utility Model No. 2569718 and Japanese Utility Model Application Laid-Open No. Heisei 1 (1989)-135344). In the actual practice, as shown in Figure 14, a mark 600 is placed at the position of the optical center (O.C) of the spectacle lens and two marks 600a and 600b are placed at positions at both sides of the optical center on a straight line passing through the position of the optical center to show the cylinder axis and the like. Thus, the uncut lens has three marks.

However, it is very complicated and difficult without sufficient skills that the prism value or the like is visually measured at a position considered to be close to the optical center using a lens meter so that the position where the value of the prism value is zero is found out. It takes a long time to find out the accurate position. Moreover, in the case of a plastic lens, sufficient care must be taken not to form scratches on the lens since the lens is moved on a processing table.

Problem to be Solved by the Invention

The present invention has been made under the above circumstances and has an object of providing a method for processing a spectacle lens which enables marking at a point of measurement selected as desired easily and quickly without the risk of forming scratches on the lens, and to provide a lens meter therefor.

Summary of the invention

In accordance with some aspects of the present invention, the data of relative positions describing the relation between the position of a mark placed at the point of measurement selected as desired and the position of an optical reference point including the position of an optical center are saved. Therefore, when the position of the mark is detected for processing the lens and the above relative positions are read, the position of the optical center or the like relative to the detected position can become known immediately. The position of blocking can be decided based on the information derived as above and a lens holder can be attached so that the uncut lens can be processed. In accordance with the inventive method, it is sufficient in the step of measuring a lens that a mark is placed simply at a position selected as desired. Complicated operations such as measuring the prism value or the like at different positions using a lens meter and finding out the position where the value derived by the measurement becomes zero are not necessary. Therefore, the mark can be placed quickly and there is no possibility of forming scratches on the lens since the lens is not moved on the processing table.

Description of Preferred Embodiments of the Invention

Fig. 1          shows a diagram describing a method for processing a spectacle lens as an embodiment of the present invention;

Fig. 2          shows a front view of a lens meter as an embodiment of the present invention;

Fig. 3          shows a side view of a lens meter as an embodiment of the present invention;

Fig. 4          shows a diagram exhibiting an internal construction of a lens meter as an embodiment of the present invention;

Fig. 5          shows a diagram exhibiting a light source;

Fig. 6          shows a diagram exhibiting a target plate;

Figs. 7 and 8    show diagrams showing embodiments of a display apparatus;

Fig. 9          shows a diagram describing the operation of marking;

Fig. 10         shows a diagram exhibiting an embodiment of marks placed on the lens;

Fig. 11         shows an expanded view of the portion for marking;

Fig. 12         shows a diagram describing the operation of blocking a lens holder to a lens;

Fig. 13         shows a diagram illustrating a lens holder blocked to a lens;

The method for processing a spectacle lens and the lens meter according to some embodiments of the present invention will be described in the following with reference to the Figures.

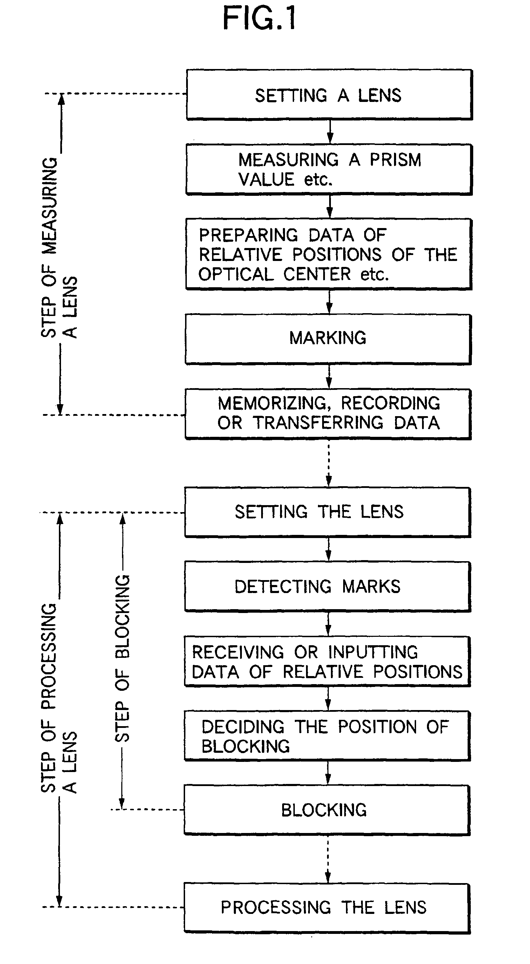

The method for processing a spectacle lens of one embodiment comprises a step of measuring a lens and a step of processing a lens as shown in Fig. 1. In the step of measuring a lens, using a round lens supplied by a lens manufacturer based on a specific prescription, optical properties such as dioptric powers are measured and confirmed using a lens meter, the position of an optical reference point such as the optical center and the cylinder axis are derived, marks showing the position and the angle are placed on the lens and the data of the positions are saved. The step of processing a lens comprises blocking a lens holder in which a lens holder which is a jig used as the axis of rotation in the processing of the lens is attached to the lens before the processing and then processing the lens. The marks placed in the step of measuring a lens are utilized for deciding the position of blocking in the step of blocking a lens holder. Since the step of processing a lens is conducted with using a conventional apparatus for processing a spectacle lens, the step of processing a lens will not be described in detail. The method for processing a spectacle lens and the lens meter described above will be described further in the following.

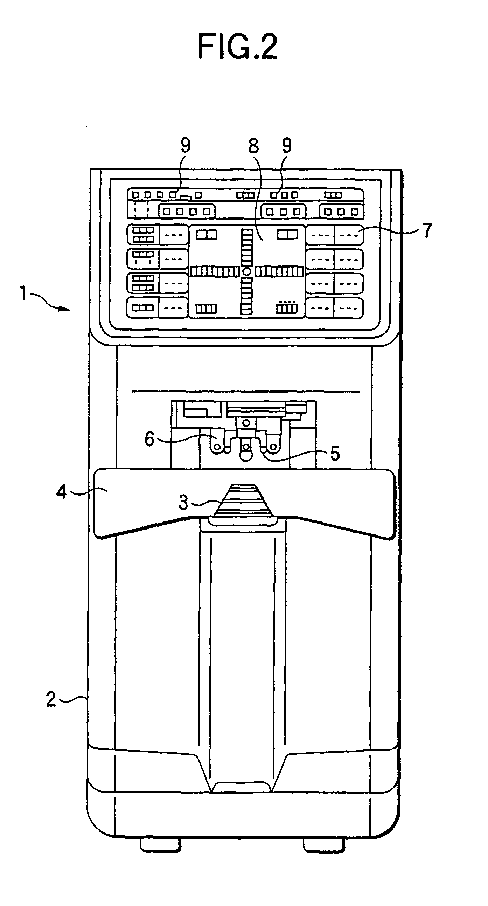

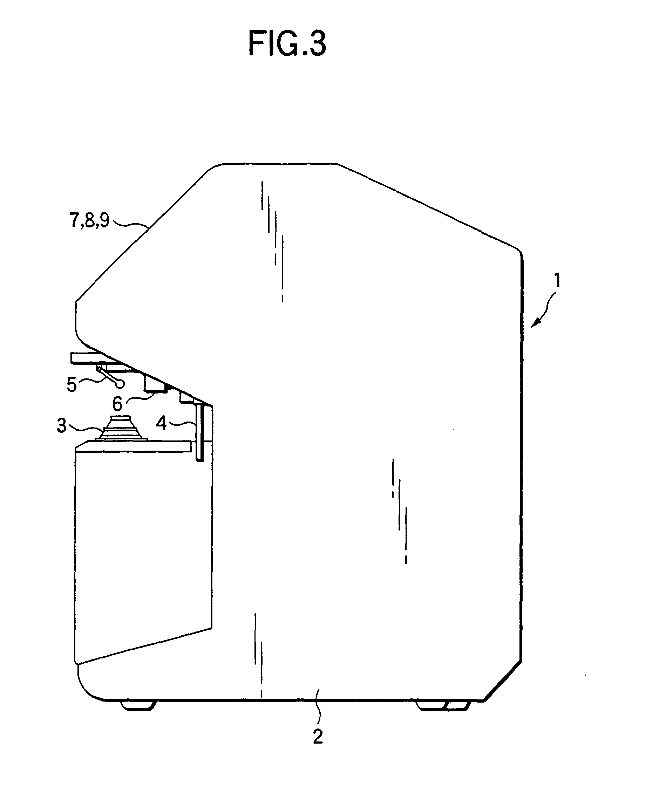

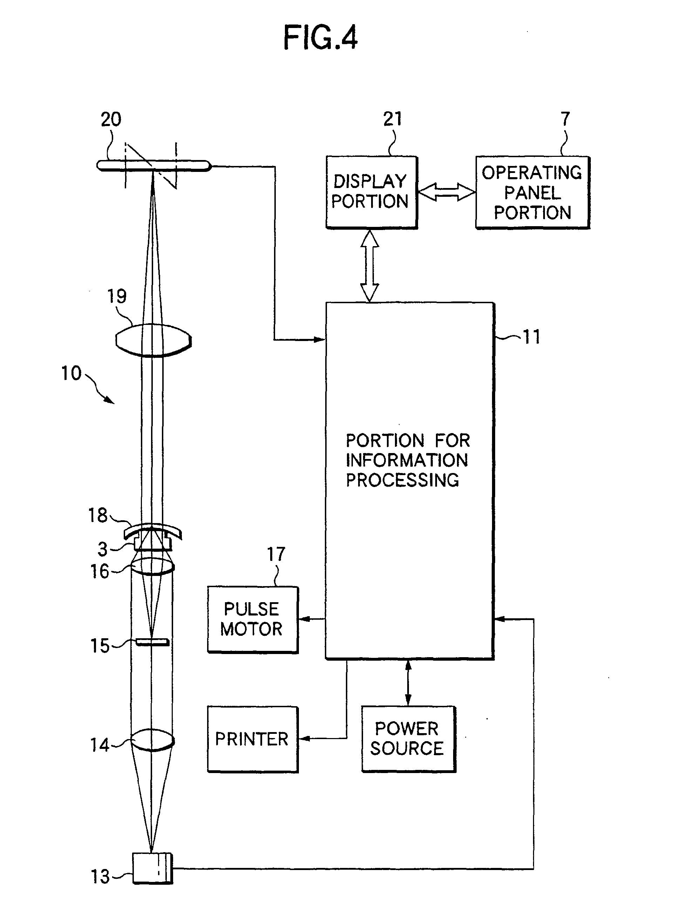

As shown in Figs. 2 and 3, a measurement table 3 for placing a lens for examination is disposed in a front portion of a main portion 2 of the lens meter 1. Behind the measurement table 3 (at an inner position of the lens meter 1), a portion for setting the position of a sample 4 for helping setting the position of the uncut lens 18 (Fig. 4) is disposed. Above the measurement table 3, a portion for holding a lens 5 is disposed. Behind the portion for holding a lens 5, a marking portion 6 for marking the light axis of the lens for examination is disposed. On the upper front face of the main portion 2, an operating panel portion 7 having switches and a power source, a display apparatus 8 for displaying the relative positions of the point of the measurement and the optical center of the lens for examination and another display apparatus 9 for displaying the results of the operation are disposed.

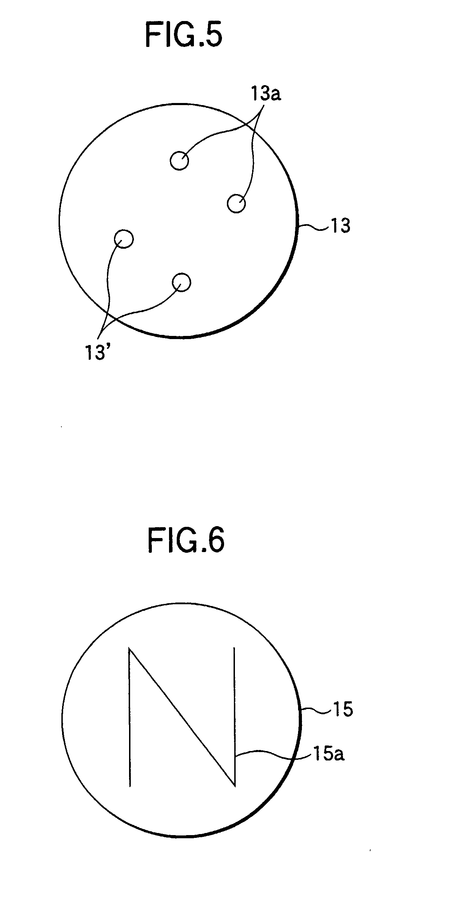

At the inside of the main portion 2, an optical system 10 for measurement and a portion 11 for information processing (Fig. 4) are contained. Fig. 4 shows a diagram exhibiting an internal construction of a lens meter as an embodiment of the present invention, which comprises the optical system 10 for measurement and the portion 11 for information processing. In Fig. 4, the number 13 means a light source of the lens meter composed of four light emitting diodes (LED) 13a emitting light of an ultra-high luminance. Fig. 5 shows a diagram exhibiting the light source 13. As shown in Fig. 5, the four LED 13a are arranged at positions separated by the same distance from adjacent units so that the calculation which will be described later is simplified. The reference number 14 indicates a condenser lens and the rays from each LED 13a are arranged into parallel rays. This means that LED 13a is disposed at the focal point of the condenser lens 14.

The reference number 15 indicates a target plate. Fig. 6 shows a diagram exhibiting the target plate 15. As shown in Fig. 6, the target plate 15 has a slit pattern 15a having the shape of N and disposed between the condenser lens 12 and a collimator lens 16 in a manner such that the target plate can be moved by a pulse motor 17. The collimator lens 16 has the function of forming an image of the light source on the lens for examination 18 and arranging the rays forming the image of the slit pattern 15a into the parallel rays by the combined effect with the lens for examination 18.

The lens for examination 18 is set at the measurement table 3 in a manner such that the optical center of the lens is placed at the same position as the position of the center of the optical system of measurement. The reference number 19 indicates an object lens and the parallel rays of the pattern 15a arranged by the collimator lens 16 and the lens for examination 18 is focused to form an image of the pattern 15a. The reference number 20 indicates an image sensor of a charge-coupled device (CCD) which is disposed at the focal point of the object lens 19 and detects the position of the pattern.

The portion 11 for information processing has the functions of controlling the system in accordance with a specific program in cooperation with devices of a control substrate, a circuit for signal processing, a circuit for driving displays, a circuit for driving light sources, a circuit for driving a pulse motor, a circuit for numerical calculation and a circuit for driving a printer, conducting calculations such as calculation of the position of the optical center, preparing and memorizing data of relative positions of the optical center and the marking and recording the data into a specific recording medium or transferring the data to other instruments such as a computer.

In the lens meter having the above construction, the amounts of the shift of the above patterns formed on the image sensor 20 from each of four LED 13a by the dioptric power (the power) of the lens for examination 18 which is placed between the collimator lens 16 and the object lens 19 and, after the target plate is moved, the amount of movement of the target plate 15 and the above amounts of the shift after the movement are used for-calculation by the circuit for numerical calculation. As a result of the calculation, optical properties of the lens for examination such as the spherical power, the cylindrical power, the direction of the axis, the prism power and the direction of the base can be obtained and displayed.

The prism value at the point of measurement can be measured by deriving the central coordinates of the pattern. The central coordinates of the pattern when the lens for examination 18 is set at the measurement table 3 is expressed as $(x_1, y_1)$ and the central coordinates of the pattern when the lens for examination 18 is not set at the measurement table 3 is expressed as $(x_0, y_0)$. When new coordinates are formed by using $(x_1-x_0)$ as the new x-coordinate and $(y_1-y_0)$ as the new y-coordinate, $(x_1, y_1)$ in the new coordinates shows the prism value P itself at the point of measurement of the lens for examination 18. When the x-component and the y-component of the prism value P are expressed by Px and Py, respectively, the relations between P, Px, Py and θ which is the angle in the direction of the base of the prism are expressed by the following equations:

$$P = \sqrt{Px^2 + Py^2}$$

$$Px = \frac{k}{4}\sum_{i=1}^{4} x_i = \frac{k}{4}(x_1 + x_2 + x_3 + x_4)$$

$$Py = \frac{k}{4}\sum_{i=1}^{4} y_i = \frac{k}{4}(y_1 + y_2 + y_3 + y_4)$$

$$\theta = \tan^{-1}\frac{Py}{Px} \qquad \text{(when Px>0, Py≥0)}$$

$$\theta = \tan^{-1}\frac{Py}{Px} + 180° \qquad \text{(when Px<0)}$$

$$\theta = \tan^{-1}\frac{Py}{Px} + 360° \qquad \text{(when Px>0, Py<0)}$$

$$\theta = 90° \qquad \text{(when Px=0, Py>0)}$$

$$\theta = 270° \qquad \text{(when Px=0, Py>0)}$$

In the above equations, k represents a proportional constant.

In the portion 11 for information processing, the relation between the position of the point of the measurement and the position of the optical center of the lens for examination is derived from the prism value at the point of the measurement derived as described above by calculation described in the following. When the prism value is represented by P, the dioptric power of the lens is represented by D and the distance between the position of the point of the measurement and the position of the optical center is represented by $\delta$, the relation between these values is expressed as: $\delta=10P/D$. When the components of the distance $\delta$ in the X-direction and in the Y-direction are represented by $\delta x$ and $\delta y$, respectively, and the components of the prism value P in the X-direction and in the Y-direction are represented by Px and Py, respectively, the relation between these values can be expressed as: $\delta x=10Px/Dx$ and $\delta y=10PyDy$.

The prism value P, the components of the prism value P in the X-direction (Px) and in the Y-direction (Py), the angle $\theta$ in the direction of the base of the prism, the spherical power and the cylindrical power of the lens for examination derived as described above are displayed on the display apparatus 9. The relation between the position of the point of the measurement and the position of the optical center is displayed on the display apparatus 8. These values are memorized by the portion for information processing, recorded on a specific recording medium or transferred to other instruments so that these values can be utilized in processing of the lens in a later step, where necessary.

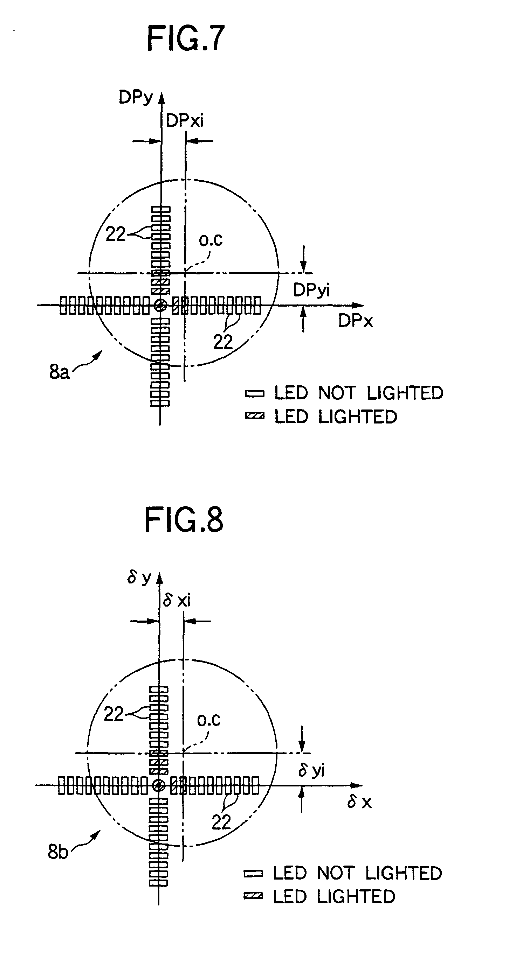

Figs. 7 and 8 show diagrams describing embodiments of the display apparatus 8 which displays the relative positions of the point of the measurement and the optical center of the lens for examination. In the embodiment shown in Fig. 7, a number of light emitting diodes (LED) 22 are arranged in the X-direction and in the Y-direction in a manner such that the distance between the adjacent diodes is, for example, 1 mm. The diode disposed at the intersection of the X-axis and the Y-axis has a circular shape and other diodes have a rectangular shape. Based on the component of the prism value P in the X-direction Px and the dioptric power of the lens at the point of the measurement (the position of the circular LED in Fig. 7) of the lens for examination (shown in Fig. 7 by a circle of a double dotted broken line), the component of the position of the optical center (shown in Fig. 7 by O.C) of the lens for examination in the X-direction with respect to the point of the measurement of the lens for examination is exhibited on the X-axis as the prism value DPx$_i$. The component of the position of the optical center of the lens for examination in the Y-direction with respect to the point of the measurement of the lens for examination is exhibited on the Y-axis as the prism value DPy$_i$.

In a case, when the dioptric power of the lens in the horizontal direction is negative, DPx becomes -Px which is the value obtained by reversing the sign of Px. When the dioptric power is positive, DPx becomes Px. Similarly, when the dioptric power of the lens in the vertical direction is negative, DPy becomes -Py which is the value obtained by reversing the sign of Py. When the dioptric power is positive, DPy becomes Py. When the dioptric power of the lens in the horizontal direction is zero, DPx becomes zero and, when the dioptric power of the lens in the vertical direction is zero, DPy becomes zero. The reason is that, when the dioptric power of the lens in the horizontal direction or in the vertical direction is zero, any position in the horizontal direction or in the vertical direction, respectively, can be the optical center.

As described above, when the display apparatus displays the values DPx and DPy showing the position of the optical center of the lens for examination with respect to the point of the measurement of the lens for examination as the prism value on the LED display of the cross type, the shift of the position of the optical center with respect to the center of the optical system for the measurement can be displayed very accurately when the lens for examination has a very great dioptric power.

In the embodiment shown in Fig. 8, based on the components of the prism value P in the X-direction Px and in the Y-direction Py at the point of the measurement (the position of the circular LED in Fig. 8) of the lens for examination (shown in Fig. 8 by a circle of a double dotted broken line) and the dioptric power of the lens at the point of the measurement, the component of the position of the optical center of the lens for examination (shown in Fig. 8 by O.C) in the X-direction with respect to the position of the measurement of the lens for examination is exhibited on the X-axis as the distance $\delta x$. The component of the position of the optical center of the lens for examination with respect to the position of the measurement of the lens for examination is exhibited on the Y-axis as the distance δy.

As described above, when the display apparatus displays the components of the position of the optical center of the lens for examination in the X-direction and in the Y-direction with respect to the point of the measurement of the lens for the measurement as the distance on the LED display of the cross type, the shift of the position of the optical center with respect to the center of the optical system for the measurement can be displayed very accurately when the lens for examination has a very small dioptric power. An example of the method for deriving the prism value is described in the above embodiment. The method for deriving the prism value is different depending on the slit pattern and the construction of the image sensor. Therefore, the prism value may be derived in accordance with other conventional methods such as the methods described in Japanese Patent Application Laid-Open No. Showa 60(1985)-17335 and US 4,180,325. In the above embodiment, the LED display having the cross arrangement is used as the display apparatus 8. Of course, other display apparatuses having X-and Y-coordinates such as liquid crystal displays and cathode ray tube displays may be used.

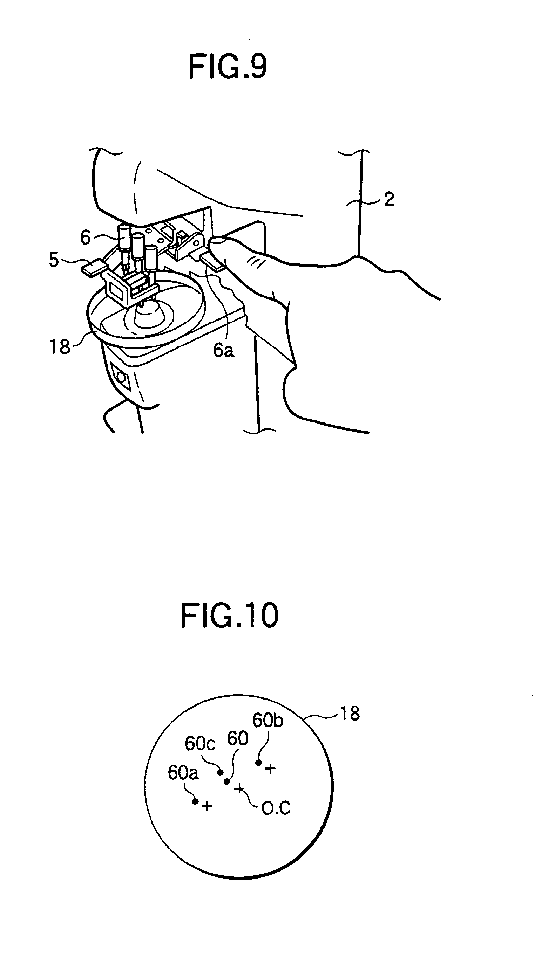

When the measurement of the prism value and the calculation of the position of the optical center have been completed, marks are placed on the lens. For the marking, the first mark 60 is placed as shown in Fig. 10 at the position of the measurement of the prism value by operating a marking lever 6a while the lens for examination is fixed at the position of the measurement of the prism value as shown in Fig. 9. On a straight line passing through the first mark 60, the second mark 60a and the third mark 60b for showing the direction of the cylinder axis and the fourth mark 60c for recognizing vertical positions of the marks are simultaneously placed. The relations between the positions have been specified in advance and already known. In general, the positions of the marks are different from the position of the optical center O.C since, in the present embodiment, the marks are not required to be placed at the position of the optical center but, instead, the lens for examination may be placed at a suitable position selected as desired and the first mark is placed at the position of the measurement decided by the position where the lens for examination is disposed (a free marking).

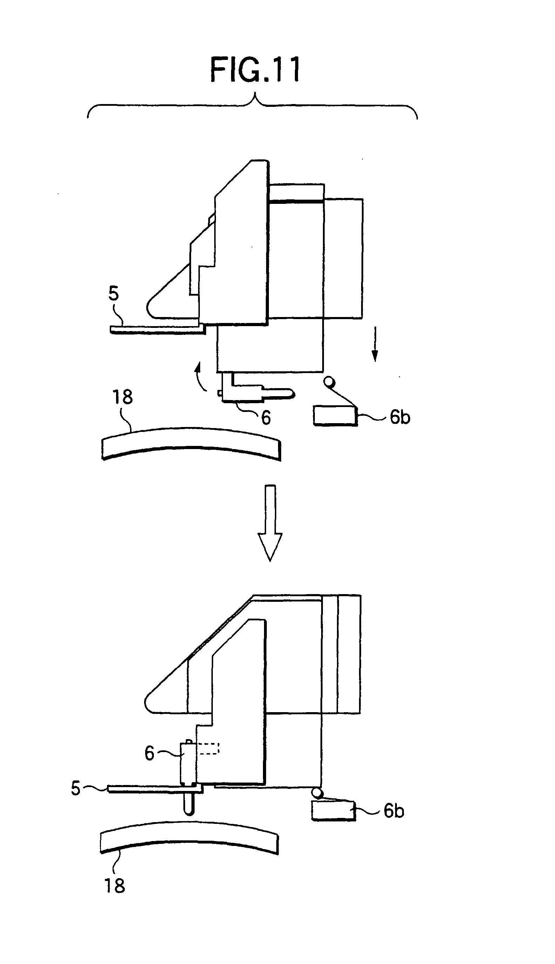

As shown in Fig. 11, a switch 6b for detecting the marking operation is disposed at the portion 6 for marking so that the switch 6b works at the moment when the mark is placed. When the switch 6b works, the prism value derived by using the position of the mark as the position of the measurement and the relation between the position of the measurement calculated from the prism value and the position of the optical center of the lens for examination are memorized by the portion 11 of information processing, recorded on a specific recording medium or transferred to another instrument so that the information can be used in the processing of the lens in the next step, where necessary.

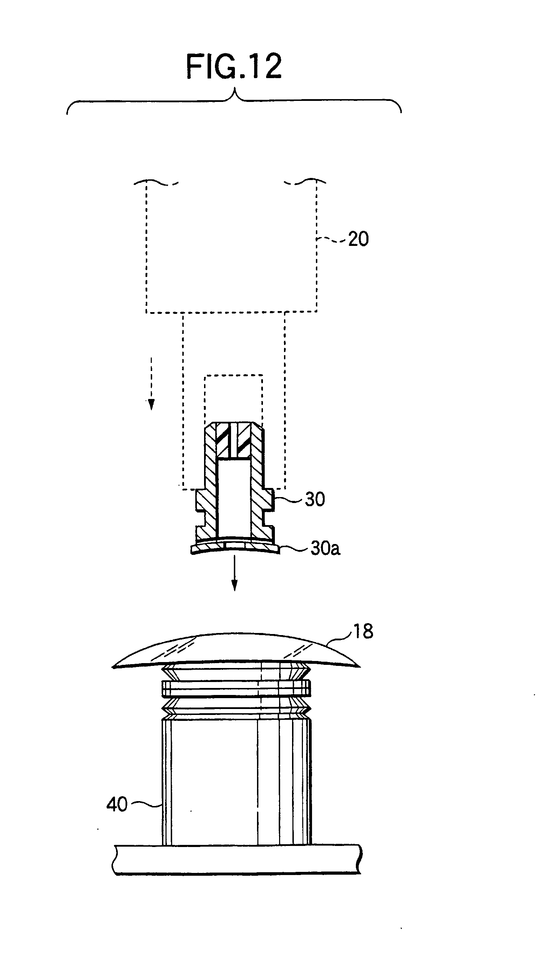

To the uncut lens 18 on which the marks are placed as described above, a lens holder is attached for processing in the next step. As shown in Fig.12, a lens holder 30 held by an apparatus for attaching a lens holder 20 is pressed to the surface of the lens 18 fixed on a table 40 for fixing a lens and attached by adhesion with an adhesive sheet 30a. In this manner, as shown in Fig. 13, the lens holder is attached to the lens 18.

In this case, the position of attaching the lens holder 30 to the lens 18 is the position of the rotational center during the processing and this position is used as the reference position for the processing. In general, the lens holder is attached at the position of the optical center. It is also necessary that the lens holder be attached in a manner such that the cylinder axis of the lens is extending in the specific direction relative towards the reference position in the direction of rotation of the lens holder 30. For this purpose, the marks placed by the above marking operation are detected and the positions are specified. In other words, the positions of the marks relative to the reference position of the apparatus for attaching a lens holder 20 are specified. Although not shown in Figures, the positions of the marks is specified by an apparatus for image processing disposed in the apparatus for attaching a lens holder 20.

When the positions of the marks are specified, the data which have been obtained in the step of measuring a lens, calculated and transferred, i.e., the data showing the relation between the positions of the marks and the position of the optical center, are read and the position of the optical center is specified. The lens holder 30 is attached to the position of the optical center of the lens 18 specified as described above. he lens to which the lens holder 30 has been attached is set to a conventional apparatus for processing a spectacle lens and processed.

Effect of the Invention

As described above, the method of the present invention comprises the step of measuring a lens in which the optical properties and the reference position of the spectacle lens are measured and the step of processing in which the lens is processed based on the optical information derived in the step of measuring a lens. In the step of measuring a lens, the optical properties such as the prism value of the lens are measured using a position selected as desired in the uncut lens as the position of the measurement, the optical reference position such as the position of the optical center is calculated from the result of the measurement, the mark is placed at the obtained position and the relation between the position of the mark and the optical reference position is memorized, recorded or transferred to another instrument. In the step of processing, the position of the mark is detected and specified, the reference position such as the position of the optical center is specified based on the position of the mark and the data which have been memorized, recorded or transferred and the lens is processed. As described above, in accordance with the inventive method for processing a spectacle lens, the mark can be placed at a position selected as desired easily and quickly without the possibility of forming damages on the lens. The lens meter used therefor has the same advantages.

List of reference numbers

[0031]

1: lens meter;
2: a main portion of the lens meter;
6: a portion for marking;
11: a portion for information processing; and
18: a lens.

**Claims**

1. A method for processing a spectacle lens comprising a step of measuring a lens which comprises deriving optical information including a position of an optical reference point using a lens meter for measuring optical properties, including a prism value of a spectacle lens and a step of processing which comprises using the optical information derived in the step of measuring a lens as a portion of data for the processing, wherein the step of measuring a lens comprises:

   a step of measurement in which the optical properties, including the prism value of the lens are measured using a point selected as desired in an uncut lens as a point of measurement,
   a step of calculation in which the position of an optical reference point, including a position of an optical center, of the uncut lens is calculated based on data obtained in the step of measurement,
   a step of marking in which the mark is placed at the point of measurement or at a point placed at a specific relative position to the point of measurement,
   a step of processing data in which data of relative positions describing a relation between the position of the mark and the position of an optical reference point, including the position of an optical center, which is obtained in the step of calculation are prepared, and
   a step of saving in which the data of relative positions derived in the step of processing data is transferred to a later step in a manner such that the data can be read or saved into a memory medium or recording medium in a manner such that the data can be read.

2. A method for processing a spectacle lens as claimed in claim 1, wherein the step of processing comprises:

   detecting a mark on the uncut lens and measuring a position of the mark,
   reading the data of relative positions saved in the step of saving,
   specifying the position of an optical reference point, including the position of an optical center, of the uncut lens based on the data of relative positions derived as above and the position of the mark measured as above, and
   conducting necessary treatments for the processing using the position of an optical reference point specified as above as a reference point.

3. A lens meter comprising:

   a portion for measuring optical properties in which the optical properties, including a prism value, of a lens are measured using a point selected as desired in a lens for measurement as a point of measurement;
   a portion for marking in which a mark is placed at the point of measurement or at a point placed at a specific relative position to the point of measurement; and
   a portion for information processing which is formed for realizing:

   a function of calculation for calculating a position of an optical reference point, including a position of an optical center, of an uncut lens based on data derived in the portion for measuring optical properties,
   a function of processing data for preparing data of relative positions describing a relation between a position of the mark and the position of an optical reference point, including the position of an optical center, which is derived by the function of calculation, and

a function of saving data for transfering the data of relative positions derived by the function of processing data to a later step in a manner such that the data can be read or saves the data into a memory medium or recording medium in a manner such that the data can be read.

**4.** An apparatus for processing a spectacle lens, which has the lens meter described in claim 3.

**Patentansprüche**

**1.** Verfahren zum Bearbeiten einer Brillenlinse, welches einen Schritt des Vermessens einer Linse umfasst, welcher das Ableiten von optischen Informationen, einschließlich der Position eines optischen Bezugspunkts, unter Verwendung eines Linsenmessers zum Messen von optischen Eigenschaften, einschließlich des Prismenwerts einer Brillenlinse, umfasst, sowie einen Bearbeitungsschritt, welcher die Verwendung der optischen Informationen, die in dem Schritt des Vermessens einer Linse als Teil der Daten für die Bearbeitung erhalten wurden, umfasst, wobei der Schritt der Vermessung einer Linse folgendes umfasst:

einen Vermessungsschritt, in dem die optischen Eigenschaften, einschließlich des Prismenwerts der Linse, unter Verwendung eines Punkts gemessen werden, der in einem Linsenrohling nach Wunsch als Messpunkt ausgewählt wird,
einen Rechenschritt, in dem die Position eines optischen Bezugspunkts, einschließlich der Position des optischen Zentrums des Linsenrohlings, aufgrund von Daten berechnet wird, die im Vermessungsschritt erhalten werden,
einen Markierungsschritt, in dem eine Markierung am Messpunkt oder an einem Punkt, der an einer bestimmten Position relativ zum Messpunkt angeordnet ist, angebracht wird,
einen Datenverarbeitungsschritt, in dem Daten über relative Positionen erzeugt werden, welche die Beziehung zwischen der Position der Markierung und der Position eines optischen Bezugspunkts, einschließlich der Position eines optischen Zentrums, die im Rechenschritt erhalten wird, beschreiben, und
einen Speicherschritt, in dem die Daten über relative Positionen, die im Datenverarbeitungsschritt erhalten werden, auf eine solche Weise auf einen späteren Schritt übertragen werden, dass die Daten ausgelesen werden können, oder in einem Speichermedium oder Aufzeichnungsmedium gespeichert werden, so dass die Daten gelesen werden können.

**2.** Verfahren zum Bearbeiten einer Brillenlinse nach Anspruch 1, wobei der Bearbeitungsschritt folgendes umfasst:

Erfassen einer Markierung auf dem Linsenrohling und Messen der Markierungsposition,
Lesen der Daten über die relativen Positionen, die im Speicherschritt gespeichert sind,
Spezifizieren der Position eines optischen Bezugspunkts des Linsenrohlings, einschließlich der Position eines optischen Zentrums, aufgrund der Daten über die relativen Positionen, die wie oben angegeben abgeleitet werden, und der Position der Markierung, die wie oben angegeben abgeleitet werden, und
Durchführen von notwendigen Bearbeitungsbehandlungen unter Verwendung der Position eines optischen Bezugspunkts, der wie oben angegeben spezifiziert wird, als Bezugspunkt.

**3.** Linsenmesser, das folgendes aufweist:

einen Abschnitt zum Messen von optischen Eigenschaften, in dem die optischen Eigenschaften einer Linse, einschließlich eines Prismenwerts, mit Hilfe eines Punkts gemessen werden, der nach Wunsch in einer Linse zum Messen als Messpunkt gewählt wird,
einen Markierungsabschnitt, in dem eine Markierung an dem Messpunkt oder an einem Punkt, der an einer bestimmten Position relativ zum Messpunkt angeordnet
ist, angebracht wird; und
einen Informationsverarbeitungsabschnitt, der ausgebildet ist, um folgendes zu verwirklichen:

eine Rechenfunktion zum Berechnen der Position eines optischen Bezugspunkts eines Linsenrohlings, einschließlich der Position des optischen Zentrums, aufgrund von Daten, die im Abschnitt zum Messen von optischen Eigenschaften abgeleitet werden,
eine Datenverarbeitungsfunktion zum Erzeugen von Daten über die relativen Positionen, welche eine Beziehung zwischen der Position einer Markierung und der Position eines optischen Bezugspunkts einschließlich der Position eines optischen Zentrums, die durch die Rechenfunktion abgeleitet wird, beschreiben und

eine Datenspeicherfunktion zum Übertragen von Daten über die relativen Positionen, die durch die Datenverarbeitungsfunktion abgeleitet werden, auf einen späteren Schritt auf solche Weise, dass die Daten gelesen werden können, oder zum Speichern der Daten in einem Speichermedium oder einem Aufzeichnungsmedium auf solche Weise, dass die Daten gelesen werden können.

4. Vorrichtung zum Bearbeiten einer Brillenlinse, welche den in Anspruch 3 beschriebenen Linsenmesser aufweist.


**Revendications**

1. Procédé destiné à traiter un verre de lunette comprenant une étape de mesure d'un verre qui comprend une étape consistant à dériver des informations optiques comportant une position d'un point de référence optique au moyen d'un dispositif de mesure de verre pour mesurer des propriétés optiques, y compris une valeur prismatique par verre de lunette et une étape de traitement qui comprend l'étape consistant à utiliser, comme une partie des données pour le traitement, les informations optiques dérivées dans l'étape de mesure d'un verre, dans lequel l'étape de mesure d'un verre comprend :

une étape de mesure dans laquelle les propriétés optiques, y compris la valeur prismatique du verre, sont mesurées au moyen d'un point sélectionné comme on le souhaite dans un verre non taillé comme point de mesure,
une étape de calcul dans laquelle la position d'un point de référence optique, y compris une position d'un centre optique, du verre non taillé est calculée sur la base de données obtenues dans l'étape de mesure,
une étape de marquage dans laquelle la marque est placée au niveau du point de mesure ou au niveau d'un point placé à une position relative spécifique par rapport au point de mesure,
une étape de traitement de données dans laquelle des données de positions relatives décrivant une relation entre la position de la marque et la position d'un point de référence optique, y compris la position d'un centre optique, qui sont obtenues dans l'étape de calcul sont préparées, et
une étape de sauvegarde dans laquelle les données de positions relatives dérivées dans l'étape de traitement des données sont transférées vers une étape ultérieure de telle sorte que les données puissent être lues ou sauvegardées dans un support formant mémoire ou un support d'enregistrement de telle sorte que les données puissent être lues.

2. Procédé destiné à traiter un verre de lunette selon la revendication 1, dans lequel l'étape de traitement comprend les étapes consistant à :

détecter une marque sur le verre non taillé et mesurer une position de la marque ;
lire les données de positions relatives sauvegardées dans l'étape de sauvegarde ;
spécifier la position d'un point de référence optique, y compris la position d'un centre optique, du verre non taillé sur la base des données de positions relatives dérivées comme ci-dessus et la position de la marque mesurée comme ci-dessus, et
mener les traitements nécessaires pour le traitement au moyen de la position d'un point de référence optique spécifié comme ci-dessus comme point de référence.

3. Dispositif de mesure de verre comprenant :

une partie destinée à mesurer des propriétés optiques dans laquelle les propriétés optiques, y compris une valeur prismatique, d'un verre sont mesurées au moyen d'un point sélectionné, comme on le souhaite, comme point de mesure dans un verre à mesurer ;
une partie destinée à réaliser un marquage dans laquelle une marque est placée au niveau du point de mesure ou au niveau d'un point placé à une position relative spécifique par rapport au point de mesure ; et
une partie destinée à traiter des informations qui est formée pour accomplir :

une fonction de calcul pour calculer une position d'un point de référence optique, y compris une position d'un centre optique, d'un verre non taillé sur la base des données dérivées dans la partie destinée à mesurer les propriétés optiques,
une fonction de traitement des données destinée à préparer des données de positions relatives décrivant une relation entre une position de la marque et la position d'un point de référence optique, y compris la position d'un centre optique, qui sont dérivées au moyen de la fonction de calcul, et
une fonction de sauvegarde de données destinée à transférer les données de positions relatives dérivées par la fonction de traitement de données vers une étape ultérieure de telle sorte que les données puissent être lues ou sauvegardées dans un support formant mémoire ou un support d'enregistrement de telle sorte que les données puissent être lues.

4. Appareil destiné à traiter un verre de lunette, lequel appareil comporte le dispositif de mesure de verre décrit selon la revendication 3.

# FIG.1

```
                    ┌─────────────────────────┐
  ─ ─ ─ ─ ─ ─ ─ ─ ─│     SETTING  A  LENS     │
  │                 └─────────────────────────┘
  │                            │
  │                            ▼
  │                 ┌─────────────────────────┐
  │                 │    MEASURING  A  PRISM   │
  │                 │       VALUE etc.         │
  │                 └─────────────────────────┘
  │                            │
  │                            ▼
  │                 ┌─────────────────────────┐
  │                 │   PREPARING  DATA  OF    │
  │                 │ RELATIVE POSITIONS OF THE│
  │                 │  OPTICAL CENTER etc.     │
  │                 └─────────────────────────┘
  │                            │
  │                            ▼
  │                 ┌─────────────────────────┐
  │                 │        MARKING           │
  │                 └─────────────────────────┘
  │                            │
  │                            ▼
  │                 ┌─────────────────────────┐
  ─ ─ ─ ─ ─ ─ ─ ─ ─│   MEMORIZING, RECORDING  │
                    │   OR TRANSFERRING DATA   │
                    └─────────────────────────┘
```

STEP OF MEASURING A LENS

```
                    ┌─────────────────────────┐
  ─ ─ ─ ─ ─ ─ ─ ─ ─│     SETTING  THE  LENS   │
  │           │     └─────────────────────────┘
  │           │                │
  │           │                ▼
  │           │     ┌─────────────────────────┐
  │           │     │     DETECTING  MARKS     │
  │           │     └─────────────────────────┘
  │           │                │
  │           │                ▼
  │           │     ┌─────────────────────────┐
  │           │     │  RECEIVING  OR  INPUTTING│
  │           │     │ DATA OF RELATIVE POSITIONS│
  │           │     └─────────────────────────┘
  │           │                │
  │           │                ▼
  │           │     ┌─────────────────────────┐
  │           │     │ DECIDING  THE POSITION OF│
  │           │     │        BLOCKING          │
  │           │     └─────────────────────────┘
  │           │                │
  │           │                ▼
  │           │     ┌─────────────────────────┐
  │        ─ ─│ ─ ─ │        BLOCKING          │
  │                 └─────────────────────────┘
  │                            │
  │                            ▼
  │                 ┌─────────────────────────┐
  ─ ─ ─ ─ ─ ─ ─ ─ ─│   PROCESSING  THE  LENS  │
                    └─────────────────────────┘
```

STEP OF PROCESSING A LENS

STEP OF BLOCKING

# FIG.2

# FIG.3

# FIG.4

# FIG.5

# FIG.6

# FIG.7

LED NOT LIGHTED
LED LIGHTED

# FIG.8

LED NOT LIGHTED
LED LIGHTED

# FIG.9

# FIG.10

# FIG.11

# FIG.12

# FIG.13

# FIG.14